Europäisches Patentamt

(19) European Patent Office

Office européen des brevets

(11) Publication number : **0 389 931 B1**

# (12) EUROPEAN PATENT SPECIFICATION

(45) Date of publication of patent specification :
29.12.93 Bulletin 93/52

(51) Int. Cl.⁵ : **B62L 3/02,** B62K 23/06,
F16C 1/12

(21) Application number : **90105257.1**

(22) Date of filing : **20.03.90**

(54) Brake control apparatus for bicycle.

(30) Priority : **25.03.89 JP 73164/89**

(43) Date of publication of application :
**03.10.90 Bulletin 90/40**

(45) Publication of the grant of the patent :
**29.12.93 Bulletin 93/52**

(84) Designated Contracting States :
**DE FR GB IT**

(56) References cited :
**WO-A-87/05576**
**FR-A- 2 320 857**
**FR-E- 54 848**

(73) Proprietor : **SHIMANO INC.**
**77, Oimatsucho 3 cho Sakai-shi**
**Osaka (JP)**

(72) Inventor : **Nagano, Masashi**
**74-19, Midorigaoka**
**Izumi-shi, Osaka (JP)**

(74) Representative : **Säger, Manfred, Dipl.-Ing.**
**Patentanwälte Säger & Partner Postfach 81 08**
**09**
**D-81908 München (DE)**

## Description

## BACKGROUND OF THE INVENTION

### 1 FIELD OF THE INVENTION

The present invention relates to a brake control apparatus for a bicycle, and more particularly to a brake control apparatus having a control lever and a cable operatively connected to the lever to be pulled thereby.

### 2 DESCRIPTION OF THE RELATED ART

Before describing the invention in details, it should be helpful to explain and define some concepts which are essential for full understanding of the invention with respect to the prior art.

First, a cable movement ratio is defined here as a ratio obtained by dividing an amount of movement of the cable caused by a unit amount of operation of the control lever from a certain position by said unit operation amount of the control lever.

Second, considering the possiblity where the amount of work applied to the control lever equates with the amount of work transmitted to the cable; then, a force transmission ratio is defined here as a ratio which varies in inverse proportion to the above-defined cable movement ratio. That is to say, supposing an input of the unit operation amount of the control lever results in a certain amount of output force from the cable in its longitudinal direction; then, the force transmission ratio is obtained by dividing this output force of the cable by the unit operation amount of the control lever. These cable movement ratio and the force transmission ratio are predetermined by the construction of the brake control apparatus per se and are not directly affected by elastic modulus of the brake shoe and/or of the cable.

In a conventional bicycle brake control apparatus, such as an apparatus disclosed in a Japanese published utility model No. 57-9193, the control lever is pivotably attached to a bracket and the cable is attached through a hole defined at a base of the control lever. Accordingly, the connecting position between the cable and the lever remains fixed relative to the pivot of the lever, regardless of an operational position of the lever.

With the above-described conventional apparatus, the connecting portion of the cable pivots about the pivot of the control lever. Then, as the operation amount of the control lever varies, the value of the above-defined cable movement ratio varies to approximate a sine curve. That is, in the conventional apparatus, the cable movement ratio is not positively differentiated according to various operational positions of the control lever. Further, the conventional apparatus has a small cable movement ratio in the initial inoperative (i.e. play) stroke of the control lever before the actuated lever brings the brake shoes, via the cable, to come into contact with the wheel rim for braking the same. This is to say that much of the limited lever stroke is used to cover the distance of the inoperative stroke. Consequently, the operative stroke of the lever, i.e. the lever stroke after the contact between the shoes and the rim is significantly limited, whereby the brake control apparatus provides only insufficient braking force.

In WO-A1-87/05576 a cam action brake lever is described having a pair of pivotal slots which is attached with pivot pins. This brake lever increases the actuating movement rativ.

A similar device is described in FR-E-54 848, in which the rotation center of the brake lever can be changed by action of a roll action on a curved face of the brake lever.

In FR-A1-2 320 857 a device for increasing the braking force is described consisting of two plates comprising an inclined and an declined ramp over which the brake cable moves.

FR-C2-1 210 326 disclosed a brake control apparatus for a bicycle according to the preamble of the present main claim which contains a cable movement ratio varying mechanism. The mechanism contains a single cam face which however cannot reduce the inoperative stroke of the control lever very effective.

Then, the primary object of the present invention is to provide a brake control apparatus for a bicycle which apparatus can provide sufficient braking force by effectively reducing the inoperative stroke of the control lever.

## SUMMARY OF THE INVENTION

For accomplishing the above-noted object, a brake control apparatus for a bicycle, according to the preamble of the main claim, comprises the features of the characterizing part the main claim.

According to the first characterizing features of the invention, because of the cable movement ratio varying mechanism operable in response to an operation of the control lever for varying the cable movement ratio, it has become possible to set the movement amount of the cable according to an operational position of the control lever to predetermined values.

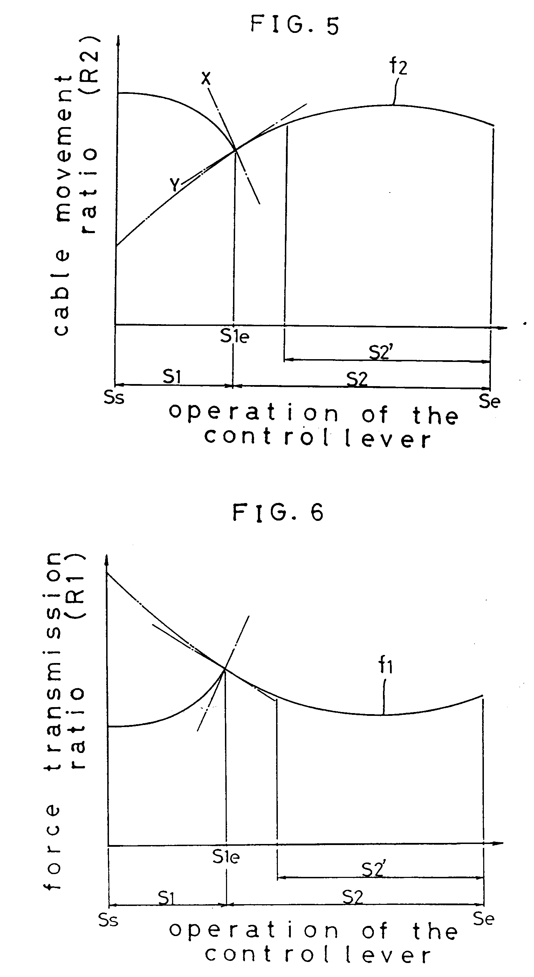

Further, in vicinity of an end of an inoperative stroke of the control lever between a lever movement start position and a lever movement finish position, the cable movement ratio varying mechanism renders a differential coefficient of a function of the cable movement ratio smaller on the side of the lever movement start position than than on the opposite side of the lever movement finish position across the inoperative stroke end. With this, it has become possible to reduce the inoperative stroke before the brake shoe comes into contact with the rim after the control lever actuation. This will be more particularly described with reference to Fig. 5.

Fig. 5 graphically shows a curve of a function f2 of the above-described cable movement ratio R2 relative to variation of the operation amount of the control lever, with the lever operation amount and the movement ratio being represented by the X axis and Y axis, respectively.

In this Fig. 5, across the end Sle of the inoperative stroke, a first tangent X is drawn to the function curve f2 on the side of the lever movement start point Ss i.e. the origin of this graph; whereas a second tangent Y is drawn to the function curve f2 on the opposite side of the lever movement finish point Se past the inflection point of the inoperative stroke end Sle. As shown, the tangent X has a clockwise slope relative to the the tangent Y. This is the effect realized by the above-described cable movement ratio varying mechanism.

On the other hand, the opposite is true with the conventional brake control apparatus. That is, the function of the lever movement ratio of the conventional apparatus approximates a sine curve, which means the first tangent has a counterclockwise slope relative to the second tangent. Consequently, the inoperative stroke occupies a greater portion of the entire stroke of the control lever, leaving only considerably limited portion for its operative stroke, whereby the apparatus can achieve inferior braking performance.

Further the control lever is pivotable, and the cable movement ratio varying mechanism varies the cable movement ratio by changing a ratio between an arm length of moment acting on a grip portion of the lever with a pivotal operation of the same and an arm length of moment acting on the cable.

The variable cable movement ratio can be obtained only by changing the ratio between the two arm lengths. Further, a desired amount of change in the ratio can be realized merely by changing the length of only one of the two arms relative to the other which length is fixed. Accordingly, the construction with these features allows greater freedom in the designing and can be constructed very simple.

Still further the control lever is pivotably attached to a bracket via a lever shaft, the control apparatus further comprising a cable connecting portion for operatively connecting the cable with the control lever, the mechanism for varying the arm length ratio including a cam device for moving the cable connecting portion along a moving direction of the cable so as to move the cable connecting portion closer to and away from the lever shaft.

Further and other objects, features and effects of the invention will become more apparent from the following more detailed description of the embodiments of the invention with reference to the accompanying drawings.

## BRIEF DESCRIPTION OF THE DRAWINGS

Figs. 1 through 6 illustrate a brake control apparatus for a bicycle, relating to a first embodiment of the invention; in which,
Fig. 1 is a vertical section of the control apparatus,
Fig. 2 is an enlarged vertical section showing a cam device of the apparatus,
Fig. 3 is a cross section showing a bracket of the apparatus,
Fig. 4 is a schematic side view of the apparatus for illustrating the working principle,
Fig. 5 is a graph of a cable movement ratio, and
Fig. 6 is a graph of a force transmission ratio,
Figs. 7 through 12 illustrate further embodiments of the invention; in which,

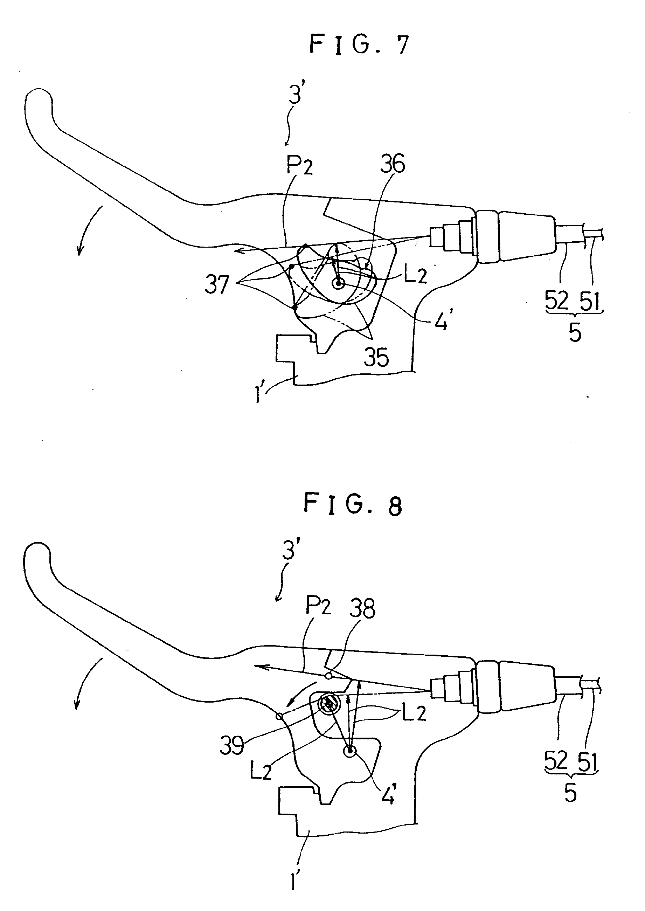

Figs. 7 and 8 are views showing major portions about a lever shaft,

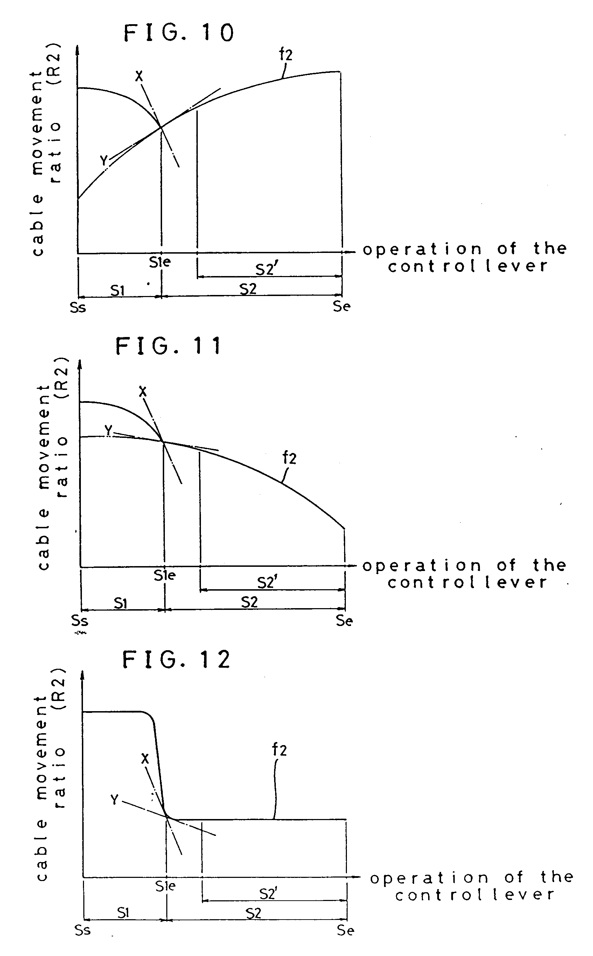

Fig. 9 is a vertical section of a cam device relating to one of the further embodiments, and
Figs. 10 through 12 are graphs of the cable movement ratio.

## DESCRIPTION OF THE PREFERRED EMBODIMENTS

Preferred embodiments of a brake control apparatus for a bicycle, relating to the present invention, will now be particularly described with reference to the accompanying drawings.

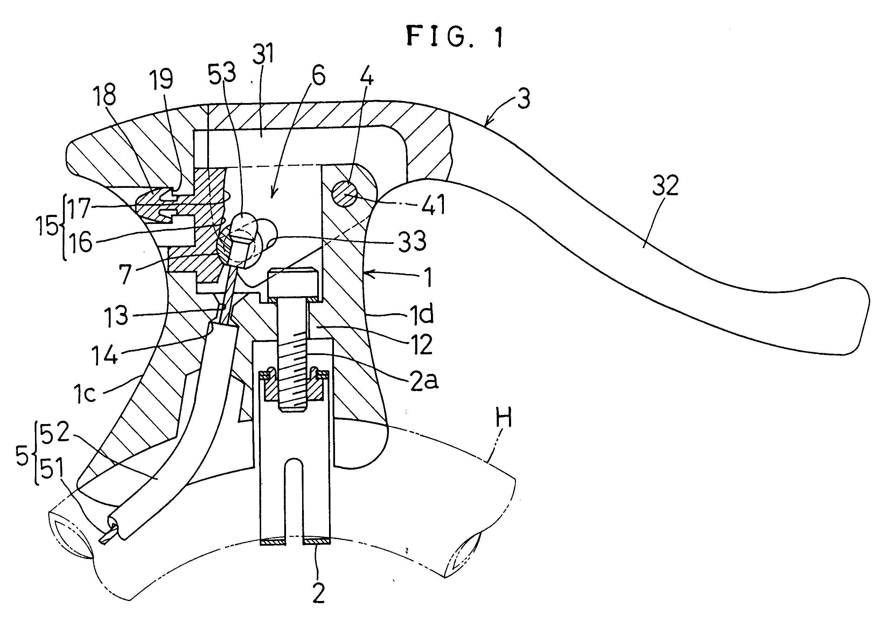

A first embodiment will be described with reference to Figs. 1 through 6. A brake control apparatus for a bicycle is to be attached to a curved portion of a drop handle H of the bicycle body. The apparatus includes, a bracket 1 having a pair of opposing side faces 1a and 1b and a lever intserting portion between the side faces 1a, 1b, so that a base 31 of a control lever 3 is pivotably attached through the lever inserting portion via a lever shaft 4. As assembled, the apparatus is fixed through its band member 2 to the curved handle portion.

The bracket 1 is formed as an angular hollow construction including the above-mentioned side faces 1a and 1b and a front face 1c and a rear face 1d connecting between the side faces 1a, 1b. Thus, the lever inserting portion 11 is formed as an opening defined at an upper portion of the rear face 1d between the opposing side faces 1a, 1b. Inside the bracket 1, there is disposed an intermediate wall 12 which supports a fastner bolt 2a engageable with the band member 2. Further, this intermediate wall 12 forms an inserting hole 13 for an inner cable 51 of a control cable 5 and an outer receiver 14 for receiving an outer tube 52 of the cable 5.

The control lever 3 includes the base portion 31 having a letter 'U' shaped cross section and inserted through the lever inserting portion 11 of the bracket 1 and a bar-shaped control portion 32 extending outwardly from an end of the base portion 31. The base portion 31 defines a shaft hole for receiving the lever shaft 4 therethrough and supports, at a front end thereof, a cable retainer 7 for retaining a nipple 53 fixed to a distal end of the inner cable 51.

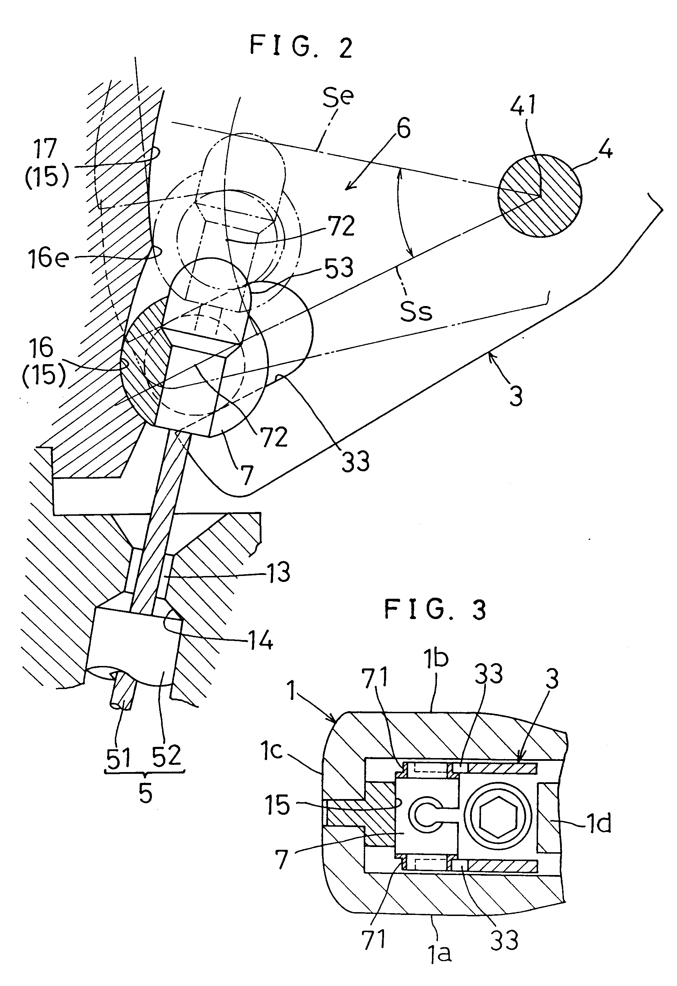

As shown in Figs. 1 and 2, an entire operational stroke of the control lever 3 is defined by a lever movement start point Ss (i.e. the home position of the lever) predetermined by contact with the bracket 1 and a lever movement finish point Se predetermined by a withdrawable amount of the inner cable 51.

As shown in Figs. 1 through 3, inside the bracket 1, there is provided a cam device 6 including the cable retainer 7 acting as a cable connecting portion for operatively connecting the inner cable 51 with the control lever 3, a guide face 33 formed on the control lever 3 and a cam face 15 attached to the bracket 1.

The cam face 15 is formed as an element made of synthtic resin material and separately from the bracket 1, so that the cam face 15 is detachable from the bracket 1. For this detachable attachment between the cam face 15 and the bracket 1, the cam face 15 includes an elastically deformable stopper element 18 while the bracket 1 includes an engaging portion 19 engageable with the stopper element 18 through elastic deformation of the latter.

The guide face 33 is formed as a recessed face extending from a front end edge of the base portion 31 of the control lever 3 to a pivot axis 41 of the lever shaft 4. Further, the cable retainer 7 is a cylindrical structure having a support hole extending radially at a longitudinal intermediate portion of the structure for receiving the nipple 53 therethrough. Thus constructed retainer 7 has its arcuate outer periphery placed in contact with the cam face 15 and has its reduced diameter portions movably supported by the guide face 33 through a pair of bushes 71. Accordingly, this cable retainer 7 has its moving path defined in its relation with the cam face 15.

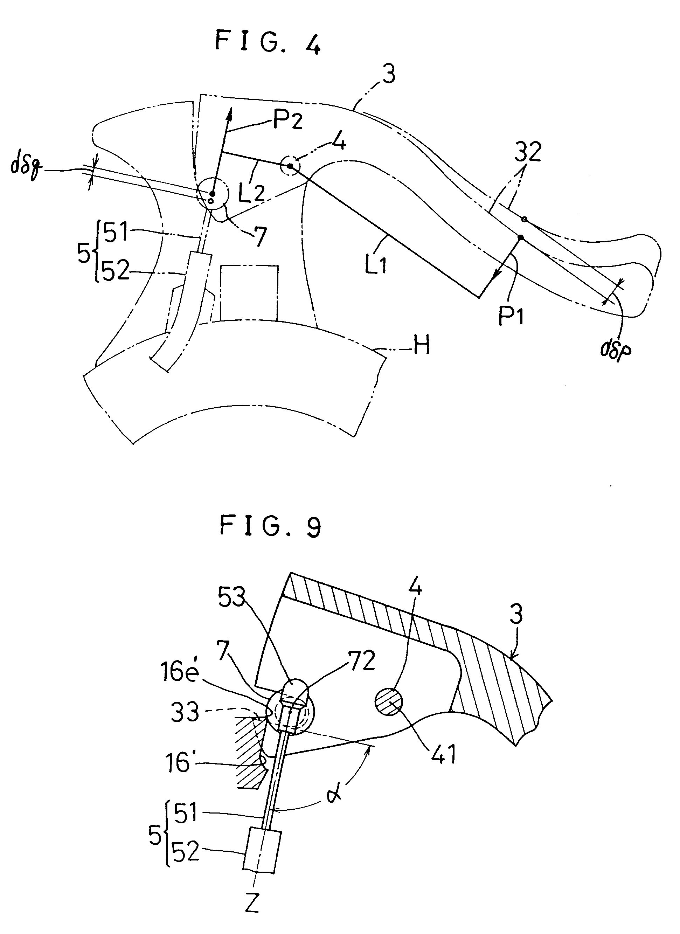

With the above-described construction, as illustrated in Fig. 4, moment acting on the control lever 3 with a manual operation of the lever 3 at a certain position thereof is transmitted to the cable retainer 7. This moment acting on the grip portion of the control lever 3 can be obtained as a product of an input force P1 applied to the lever 3 multiplied by a length L1 of an input arm defined by a perpendicular line drawn from the pivot shaft 4 to an extension of the line of the input force P1. Although the magnitude and direction of the input force P1 varies according with the operation of the control lever 3, the amount of this variation is negligible. Therefore, the input arm length L1 can be considered as substantially constant through the entire stroke of the lever 3, regardless of the operational position of the same. On the other hand, moment acting on the cable retainer 7 is obtained as a product of an output force P2 acting along the longitudinal direction of the inner cable 51 associated with the input force P1 of the control lever 3 multiplied by a length L2 of an output arm defined by a perpendicular line drawn from the lever shaft 4 to an extension of the output force P2. Then, since the magnitudes of the moment acting on the grip portion and that acting on the cable retainer 7 are substantially the same, we obtain:

$$(P1) \times (L1) = (P2) \times (L2) \quad \text{Eq. (a)}$$
$$(P2) = ((P1) \times (L1)) / (L2) \quad \text{Eq. (b)}$$

That is, it is possible to vary the output force P2 by varying the output arm length (L2).

Suppose a small movement distance of the control portion 32 caused by a unit input force P1 to the control lever 3 at a certain operational position of the lever 3 is d $\delta$ p and a small movement distance of the inner cable 51 caused by the unit input force P1 is d $\delta$ q, then, according to the law of conservation of momentun, we have:

$$(P1) \times (d \delta p) = (P2) \times (d \delta q) \quad \text{Eq. (c)}$$

Using the Eq. (b), the Eq. (c) can be rewritten as:

$$(d \delta q) = (d \delta p) / (L1) \times (L2) \quad \text{Eq. (d)}$$

Then, it is possible to vary the minute movement distance d $\delta$ q by varying the output arm length L2.

Eq. (c) can be further rewritten as:

$$(P1)/ (P2) = (d \delta q)/(d \delta p) = (R2) \quad \text{Eq.(e)}$$

where, R2 is a cable movement ratio.

Assume the input force P1 of the moment acting on the control lever 3 is substantially constant, the cable movement ration R2 varies in inverse proportion to the output force P2 of the inner cable 51.

Eq. (e) can be further expressed as:

$$(R1) = 1 / (R2) \quad \text{Eq.(f)}$$

where, R1 is a force transmission ratio.

Therefore, the force transmission ratio R1 varies in inverse proportion to the cable movement ratio R2.

Next, the configuration of the cam face 15 will now be described with reference to graphs of Figs. 5 and 6 showing function curves f1 and f2 of the force transmission ratio R1 and the cable movement ratio R2, respectively.

In Fig. 6, the function curve f1 represents variation of the force transmission ratio R1 with respect to variation in the operation amount of the control lever 3 which is represented by the X axis. In Fig. 5, the function curve f2 represents variation of the cable movement ratio R2 with respect to variation in the operation amount of the control lever 3 which is represented by the X axis. In these graphs, the entire stroke of the control lever 3 consists of two continous ranges, between the lever movement start point Ss and the lever movement finish point Se, that is an inoperative (i.e. play) stroke S1 before and until a brake shoe cames into contact with a rim of a bicycle wheel and an operative stroke S2 where the brake shoe actually brakes the rotating rim after the above contact.

Then, in this first embodiment, as best shown in Fig. 2, the cam face 15 includes first and second cam faces 16 and 17 having different curves, so as to vary the cable movement ratio R2 in a manner described next.

The first cam face 16 corresponding to the inoperative stroke S1 is formed as a curve extending from a point of the cam face 15 most distant from the pivot axis 41 of the lever shaft 4 to gradually approach this axis 41, so as to move a center 72 of the cable retainer 7 gradually closer to the pivot axis 41 as the lever pulling operation proceeds. Accordingly, during the inoperative stroke S1, the cable movement ratio R2 is relatively large, and therefore a small amount of lever pulling operation can quickly bring the brake shoe and the rim into contact with each other for subsequent braking operation, even if the shoe and the rim are designed with a relatively large clearance therebetween. The second cam face 17 is formed continously from a terminal end 16e of the above-described first cam face 16, so that the function curve f2 of the cable movement ratio R2 is formed continous through the entire stroke of the control lever 3.

More particularly, in this first embodiment of the invention using the above-described first and second cam faces 16 and 17, in the vicinity of an end Sle of the inoperative stroke S1 corresponding to the terminal end 16e of the first cam face 16, i.e. in the border area between these first and second cam faces, a differential coefficient of the function curve f2 of the cable movement ratio R2, which varies with the operational amount of the control lever 3, is smaller on the side of the lever movement start point Ss than on the opposite side of the lever movement finish point Se across the inoperative stroke end Sle. This can be fully understood by comparing slopes of a tangent X of the inoperative stroke S1 to the function curve f2 and a further tangent Y of the operative stroke S2 to the function curve f2. The above-mentioned "vicinity" of the end Sle of the inoperative stroke S1 is understood as including the point of the end Sle per se. Also, this end Sle of the inoperative stroke S1 is predetermined by design of the entire brake system such as of the brake shoe, and the end Sle may differ from an end of an actual inoperative range depending on the design.

Referring back to Figs. 5 and 6, alternate long and two short dashed lines represent function curves of the cable movement ratio R2 and the force transmission ratio R1 obtained by the conventional brake control apparatus. Further, a mark S2' denotes an operative stroke of this conventional apparatus. As compared, the operative stroke S2 of the apparatus of the present invention is greater than the stroke S2' of the conventional apparatus, which means that the former can achieve better braking performance than the latter.

A second embodiment of the invention will be described next with reference to Fig. 7.

A brake control apparatus relating to this second embodiment is designed for use in the so-called allterrain bicycle (commonly referred to as an ATB). In Fig. 7 showing this apparatus, the same members and elements as those in the first embodiment are denoted by the same reference numerals and marks. Numeral 35 denotes a takeup member pivotable about a lever shaft 4' relative to a bracket 1' with a pivotal operation of a control lever 3' so as to take up the inner cable 51. This takeup member 35 includes, at a position on its outer periphery portion 36 thereof, a retainer portion 37 for retaining the distal end of the nipple 53, so that the takeup member 35 pulls and takes up the inner cable 51 about the outer periphery portion 36 with a pulling operation of the control lever 3'. Further, the outer periphery portion 36 is so configurated as to have its distance to the lever shaft 4' vary according to the operational position of the control lever 3', thus positively varying the output arm length L2 of the moment acting on the inner cable and consequently the cable movement ratio R2.

A third embodiment will be described next with reference to Fig. 8.

A brake control apparatus of this third embodiment is designed also for use in the ATB type bicycle, as is the case with the apparatus of the above second embodiment. In this apparatus, the base of the control lever 3' mounts, on one side thereof, a shaft, on which a cable retainer 38 is pivotably attached. On the other hand, the bracket 1', at a forward position in the pivotal direction of the lever 3', pivotably mounts a contact roller 39 which comes into contact with the inner cable with a lever pulling operation. In operation, when the control lever 3' is pulled, first, the inner cable 51 moves closer to the lever shaft 4', thus gradually reducing the output arm length L2 of the cable. Then, as the lever 3' is futher pulled, the inner cable 51 comes into contact with the contact roller 39, which contact changes the direction of the output force P2 of the moment acting on the cable 5, thus increasing the output arm length L2 again after the contact. In this way, the apparatus of this emboidment can vary the cable movement ratio R2.

A fourth embodiment will be described next with reference to Fig. 9.

In the first embodiment, the cam face 15 includes the first cam face 16 and the second cam face 17. Of these faces, the second cam face 17 is eliminated in this fourth embodiment. In this case, in order to prevent the cable retainer 7 from detaching from the end of the guide face 33 beyond a terminal end 16e' of a first cam face 16', the guide face 33 is so formed that the guide face 33 and a line Z along the cable pulling direction form an angle $\alpha$ not greater than 90 degrees when the cable retainer 7 has passed the terminal end 16e'.

Some other embodiments of the invention will be specifically described next.

As illustrated in Fig. 10, the function f2 can have a gradually increasing value to the lever movement finish point Se. Conversely, as illustrated in Fig. 11, the value of the function f2 can gradually decrease in the same direction. Further, as shown in Fig. 12, it is also conceivable for the value of the cable movement ratio R2 to drop sharply in the vicinity of the inoperative stroke end Sle while the same remains constant through the operative stroke S2. Still further, though not illustrated, the function f2 of the cable movement ratio R2 can be discontinuous in the vicinity of the inoperative range end Sle.

In all of the above-described embodiments, the force transmission ratio R1 is changed by varying the output arm length L2. Instead, the ration R1 can be changed by varying the input arm length L1. Further, it is also conceivable to vary both of these arm lengths L1 and L2 to obtain such variable force transmission ratio R1. For this purpose, it is conceivable to construct a quadrople link mechanism by pivotally attaching the control lever 3 to the bracket 1 by means of a pair of link elements. Then, by appropriately setting pivot-to-pivot distances of this mechanism, the input arm length L1 can be changed for varying the force transmission ratio R1 to a desired value.

The cam face 15 attached to the front face 1c of the bracket 1 can be attached to either of the side faces 1a, 1b. In this case, the opposite ends of the cable retainer 7 will be outwardly extended so as to come into contact with the cam face 15 directly or through bushes or the like. The specific configuration of the cam face 15 is not limited to the one described in the first embodiment but can be designed differently depending on the convenience.

As described and illustrated in the drawings, it is preferred that the cable retainer 7 supported to the control lever 3 remain disconnected from the cable 5. Yet, the retainer 7 can be connected with the cable 5 in some occasions. That is, the specific construction of this cable retainer 7 is not essential for the present invention.

In the first embodiment, considering e.g. its replacement due to wear or exchangeability for a different design, the cam face 15 is formed of synthetic resin material and separately from the bracket 1 so as to be freely detachable from the bracket 1. Instead, the cam face 15 can be formed integrally with the bracket 1.

The in-tube type cable 5 having the outer tube 5 can be substituted by the inner cable 51 alone.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A brake control apparatus for a bicycle, comprising

   a bracket member(2);

   a control lever (3) pivotably connected to said bracket member (2) through a lever shaft (4) and operable to pull a cable (5) connected thereto;

   a cable movement ratio varying mechanism (6) operable in response to an operation of said control lever (3) for varying a cable movement ratio (R2) obtained by dividing an amount of movement (dδq) of the cable (5) caused by an amount of operation (dδp) of the control lever (3) from a position thereof by said operation amount (dδq) of the control lever,

   characterized in that

   said cable movement ratio varying mechanism (6) includes a first and second cam faces with said first cam face corresponding to an inoperative stroke (S1) of said control lever (3) where the brake shoe does is not in contact with a rim, and said second face corresponding to an operative stroke (S2) of said control lever (3) where said brake shoe is in contact with said rim operatively for braking action,

   and in that

   said first and second cam faces are formed such that, in the transition area from said inoperative stroke (S1) to said operative stroke (S2), a differential coefficient of a function, which has said cable movement ratio (R2) as its value and said amount of operation (dδq) as its variable, is smaller on the side of said inoperative stroke (S1) than on the side of said operative stroke (S2).

2. A brake control apparatus according to Claim 1 characterized in that

   said cable movement ratio varying mechanism (6) varies said cable movement ratio (R2) by changing a ratio between an arm length (L1) of moment acting on a grip portion of said lever (3) with a pivotal operation of the same about said lever shaft (4) of said control lever (3) and an arm length (L2) of moment acting on said cable (5).

3. A brake control apparatus according to Claim 1 or 2 characterized in that

   said control lever (3) includes a cable connecting portion (7) that connects said control cable (5) to said control lever (3),

   and that

   said first and second cam faces of said cable movement ratio varying mechanism function as a cam mechanism that causes said cable connecting portion (7) to move along a moving direction of said cable (5) so as to move said cable connecting portion (7) closer to and away from said lever shaft (4).

4. A brake control apparatus according to one of Claims 1 to 3 characterized in that
said control lever further includes a movement allowing face (33) for allowing said approaching and departing movements of the cable connecting portion relative to said lever shaft (4).

5. A brake control apparatus according to one of Claims 1 to 4 characterized in that
said first cam face (16) is formed as a curved face extending from a point of said first cam face (16) most distant from a point of said axis (41) of said lever shaft (4) to gradually approach said pivot axis.

6. A brake control apparatus according to one of Claims 1 to 5 characterized in that
said second cam face (17) is formed continuously from an end (16e) of said first cam face (16).

7. A brake control apparatus according to one of Claims 1 to 6 characterized in that
said first and second cam faces (16),(17) are disposed inside said bracket (1).

8. A brake control apparatus according to one of Claims 1 to 7 characterized in that
said first and second cam faces (16),(17) are formed as a separate entity from said bracket and are detachably attached thereto.

9. A brake control apparatus according to Claim 4 characterized in that
said movement allowing face (33) is a linear slot provided on said control lever.


**Patentansprüche**

1. Bremsbetätigungsvorrichtung für Fahrräder, welche folgendes aufweist:
ein Halterungselement (2);
einen drehbar mit dem Halterungselement (2) über eine Hebelwelle (4) verbundenen Betätigungshebel (3), der so betätigbar ist, daß er auf ein damit verbundenes Seil (5) eine Zugwirkung ausübt;
eine im Ansprechen auf eine Betätigung des Betätigungshebels (3) betätigbare Mechanik (6) zur Veränderung des Seilbewegungsverhältnisses, welche ein Seilbewegungsverhältnis (R2), das durch Division eines Bewegungsbetrags (dδq) des Seils, der durch einen Betrag (dδp) der Bewegung des Betätigungshebels (3) aus einer seiner Positionen hervorgerufen wird, durch den Betätigungsbetrag (dδq) des Betätigungshebels erhalten wird,
**dadurch gekennzeichnet**, daß
die Mechanik (6) zur Veränderung des Seilbewegungsverhältnisses eine erste und zweite Nockenfläche aufweist, wobei die erste Nockenfläche einem Tothub (S1) des Betätigungshebels (3) für den Fall entspricht, daß die Bremsbacke nicht mit einer Felge in Berührung steht, und wobei die zweite Fläche einem Arbeitshub (S2) des Betätigungshebels (e) für den Fall entspricht, daß die Bremsbacke wirksam zur Herbeiführung einer Bremswirkung mit der Felge in Berührung steht,
und dadurch, daß
die erste und die zweite Nockenfläche so geformt sind, daß im Bereich des Übergangs vom Tothub (S1) zum Arbeitshub (S2) ein Differentialkoeffizient einer Funktion, bei der das Seilbewegungsverhältnis (R2) als Wert und der Betätigungsbetrag (dδq) als Variable eingesetzt sind, auf der Seite des Tothubs (S1) kleiner ist als auf der Seite des Arbeitshubs (S2).

2. Bremsbetätigungsvorrichtung nach Anspruch 1, dadurch gekennzeichnet, daß
die Mechanik (6) zur Veränderung des Seilbewegungsverhältnisses das Seilbewegungsverhältnis (R2) dadurch verändert, daß das Verhältnis zwischen einer Hebelarmlänge (L1) des auf ein Griffstück des Hebels (3) einwirkenden Moments unter Schwenkbewegung desselben um die Hebelwelle (4) des Betätigungshebels (3) unter einer Hebelarmlänge (L2) des auf das Seil (5) einwirkenden Moments verändert wird.

3. Bremsbetätigungsvorrichtung nach Anspruch 1 oder 2, dadurch gekennzeichnet, daß
der Betätigungshebel (3) einen Seilverbindungsabschnitt (7) aufweist, über welchen das Betätigungsseil (5) mit dem Betätigungshebel (3) verbunden ist,
und daß
die erste und zweite Nockenfläche der Mechanik zur Veränderung des Seilbewegungsverhältnisses als Nockenmechanik fungieren, welche den Seilverbindungsabschnitt (7) zur Bewegung in einer Bewegungsrichtung (5) so veranlaßt, daß der Seilverbindungsabschnitt (7) sich näher zur Hebelwelle (4) hin und von dieser weg bewegt.

4. Bremsbetätigungsvorrichtung nach einem der Ansprüche 1 bis 3, dadurch gekennzeichnet,
daß der Betätigungshebel weiterhin eine eine Bewegung gestattende Fläche (33) aufweist, welche eine Bewegung des Seilverbindungsabschnitts zur Hebelwelle (4) hin und von dieser weg zuläßt.

5. Bremsbetätigungsvorrichtung nach einem der Ansprüche 1 bis 4, dadurch gekennzeichnet, daß die erste Nockenfläche (16) als gekrümmte Fläche ausgebildet ist, die sich von einem von einem Punkt auf der Achse (41) der Hebelwelle (4) am weitesten entfernten Punkt auf der ersten Nockenfläche aus erstreckt und sich allmählich an die Schwenkachse annähert.

6. Bremsbetätigungsvorrichtung nach einem der Ansprüche 1 bis 5, dadurch gekennzeichnet, daß die zweite Nockenfläche (17) durchgehend von einem Ende (16e) der ersten Nockenfläche (16) gebildet wird.

7. Bremsbetätigungsvorrichtung nach einem der Ansprüche 1 bis 6, dadurch gekennzeichnet, daß die erste und zweite Nockenfläche (16, 17) innerhalb des Halterungselements (1) angeordnet sind.

8. Bremsbetätigungsvorrichtung nach einem der Ansprüche 1 bis 7, dadurch gekennzeichnet, daß die erste und die zweite Nockenfläche (16, 1) als von der Halterung getrennte Einheit ausgebildet und lösbar an dieser befestigt sind.

9. Bremsbetätigungsvorrichtung nach Anspruch 4, dadurch gekennzeichnet, daß die eine Bewegung gestattende Fläche (33) ein linearer Schlitz ist, der auf dem Betätigungshebel vorgesehen ist.

**Revendications**

1. Dispositif de commande de frein pour bicyclette comprenant :
   un élément de console (2) ;
   un levier de commande (3), relié à pivotement audit élément de console (2) par un axe de levier (4) et ayant pour fonction de tirer un câble (5) auquel il est relié ;
   un mécanisme (6) de variation d'un rapport de mouvement du câble agissant en réponse à une action dudit levier de commande (3) pour faire varier un rapport (R2) de mouvement du câble obtenu en divisant une amplitude du mouvement (dδq) du câble (5) provoqué par une amplitude (dδp) du mouvement exercé sur le levier de commande (3) à partir d'une position de ce dernier par ladite amplitude (dδq) du mouvement exercée sur le levier de commande

caractérisé en ce que :
   ledit mécanisme de variation du rapport du mouvement du câble (6) comprend une première et une seconde face de came, ladite première face de came correspondant à une course inactive (S1) dudit levier de commande (3) au cours de laquelle le patin de frein n'est pas en contact avec une jante, et ladite seconde face de came correspondant à une course active (S2) dudit levier de commande (3) au cours de laquelle ledit patin de frein est en contact avec ladite jante fonctionnellement pour exercer une action de freinage,

   et en ce que :
   lesdites première et seconde faces de came sont formées de manière, que dans la zone de transition entre ladite course inactive (S1) et ladite course active (S2), un coefficient différentiel de la fonction qui représente la valeur dudit rapport (R2) de mouvement du câble en fonction de ladite amplitude (dδp) du mouvement comme variable, est plus faible du côté de ladite course inactive (S1) que du côté de ladite course active (S2).

2. Dispositif de commande de frein selon la revendication 1, caractérisé en ce que ledit mécanisme (6) de variation du rapport de mouvement du câble fait varier ledit rapport (R2) de mouvement du câble en modifiant un rapport entre une longueur du bras (L1) du moment agissant sur une partie de poignée dudit levier (3) avec une opération de pivotement dudit levier autour dudit axe de levier (4) dudit levier de commande (3) et une longueur de bras (L2) du moment agissant sur ledit câble (5).

3. Dispositif de commande de frein selon la revendication 1 ou 2, caractérisé en ce que ledit levier de commande (3) comprend une partie de liaison de câble (7) qui relie ledit câble de commande (5) audit levier de commande (3), et en ce que lesdites première et seconde faces de came dudit mécanisme de variation du rapport du mouvement du câble jouent le rôle d'un mécanisme à came qui fait déplacer ladite partie de liaison du câble (7) le long d'une direction du mouvement dudit câble (5) de façon à rapprocher et à éloigner ladite partie de liaison du câble (7) et ledit axe de câble (4).

4. Dispositif de commande de frein selon l'une des revendications 1 à 3, caractérisé en ce que ledit levier de commande comporte en outre une face autorisant un mouvement (33) pour permettre lesdits mouvements d'approche et d'éloignement de la partie de liaison du câble par rapport audit axe de levier (4).

5. Dispositif de commande de frein selon l'une des revendications 1 à 4, caractérisé en ce que ladite première face de came (16) est formée sous la forme d'une face courbe s'étendant d'un point de ladite première face de came (16) plus éloigné d'un point dudit centre (41) dudit axe de levier (4) pour se rapprocher progressivement dudit axe de pivotement.

6. Dispositif de commande de frein selon l'une des revendications 1 à 5, caractérisé en ce que ladite seconde face de came (17) est formée en continuité à partir d'une extrémité (16e) de ladite première face de came (16).

7. Dispositif de commande de frein selon l'une des revendications 1 à 6, caractérisé en ce que lesdites première et seconde faces de came (16, 17) sont placées à l'intérieur de ladite console (1).

8. Dispositif de commande de frein selon l'une des revendications 1 à 7, caractérisé en ce que lesdites première et seconde faces de came (16), (17) sont formées comme une entité distincte de ladite console et sont fixées sur cette dernière de manière amovible.

9. Dispositif de commande de frein selon la revendication 4, caractérisé en ce que ladite face (33) permettant le mouvement est une fente linéaire formée sur ledit levier de commande.

# FIG. 1

EP 0 389 931 B1

FIG. 2

FIG. 3

FIG. 4

FIG. 9

FIG. 5

FIG. 6

# F I G. 7

# F I G. 8

# FIG. 10

# FIG. 11

# FIG. 12